# EUROPEAN PATENT APPLICATION

(11) **EP 1 976 327 A1**
(43) Date of publication of application: **01.10.2008**
(21) Application number: 07105058.7
(22) Date of filing: 27.03.2007
(51) Int. Cl.: H04Q 9/00

(54) **Sensor system**

(71) Applicant: Nederlandse Organisatie voor toegepast- natuurwetenschappelijk onderzoek TNO, 2628 VK The Hague (NL)
(72) Inventor: Elferink, Franciscus Hedrikus, 2211 MR Noordwijkerhout (NL); Busking, Erik Bert, 2564 TK Den Haag (NL)
(74) Representative: van Loon, C.J.J.

(57) **Abstract**

Sensor system comprising an RF transceiver (1) which is arranged to transmit an RF signal (2) and to receive reflections (3) of the transmitted RF (radio or radar) signal. The sensor system comprises a transponder (4) having an antenna (5) which is tuned to the RF signal's frequency. The antenna is connected to a switching element (6) which is arranged to switch the antenna's terminating impedance between at least two values and which switching element is controlled by digital control means (7, 10). The control means are e.g. controlled by voice (9). The antenna (5) preferably is a micro strip or printed antenna or a micro strip patch antenna or patch antenna, e.g. comprising an insulated carrier (13) having a first conductive layer (11) on one side and a second conductive layer (12) on the other side.

## Description

### Field of the invention

The invention concerns a sensor system using a transponder.

### Background of the invention

Sensor system comprising an RF transceiver which is arranged to transmit an RF signal and to receive reflections of the transmitted RF signal, the sensor system comprising a transponder which comprises an antenna which is tuned to the RF signal's frequency.

Such sensor system are generally known, e.g. in the form of radar systems, used for the sensor of objects.

### Summary of the invention

One aim of the present invention is to provide a sensor system which is able to receive information from a local site, however, without any RF radiation from the local site. Due to absence of RF radiation, the system may e.g. be suitable for eavesdropping applications in the broadest sense, i.e. wireless applications is which a local sensor is able to give information without actively radiating any signal.

According to the invention a sensor system is provided which preferably comprises an RF transceiver which is arranged to transmit an RF signal and to receive reflections of the transmitted RF signal, the sensor system, moreover, comprising a (local) transponder which comprises an antenna which is tuned to the RF signal's frequency, wherein the antenna is connected to a switching element which is arranged to switch the antenna's terminating impedance between at least two values and which switching element is controlled by digital control means. For example, the transponder's control module may be controlled by digital data from a data module, e.g. within the transponder or connected to it. As preferred example, the control module could be controlled by digitalized voice.

The system preferably is arranged to operate in a radar frequency band.

By much preference the antenna is a in the form of a micro strip or printed antenna, e.g. a micro strip patch antenna or patch antenna, which is very advantageous in view of their efficiency, small (esp. flat) dimensions and their insensitivity for effects of parasitic capacitance, such as the so-called hand (or body) effect.

Below the invention will be discussed more in detail referring to an exemplary embodiment.

### Exemplary Embodiment

Fig. 1 shows schematically an exemplary embodiment of a sensor system according to the invention;
Fig. 2 shows the structure of an antenna which preferably may be used, in plan view, Fig. 3 in bottom view;
Fig. 4 shows the circuitry of the embodiment of the sensor part of Fig. 1 more in detail, Fig. 5 including means for setting and/or programming the sensor part;
Fig. 6 shows the radiation pattern of the exemplary antenna structure.

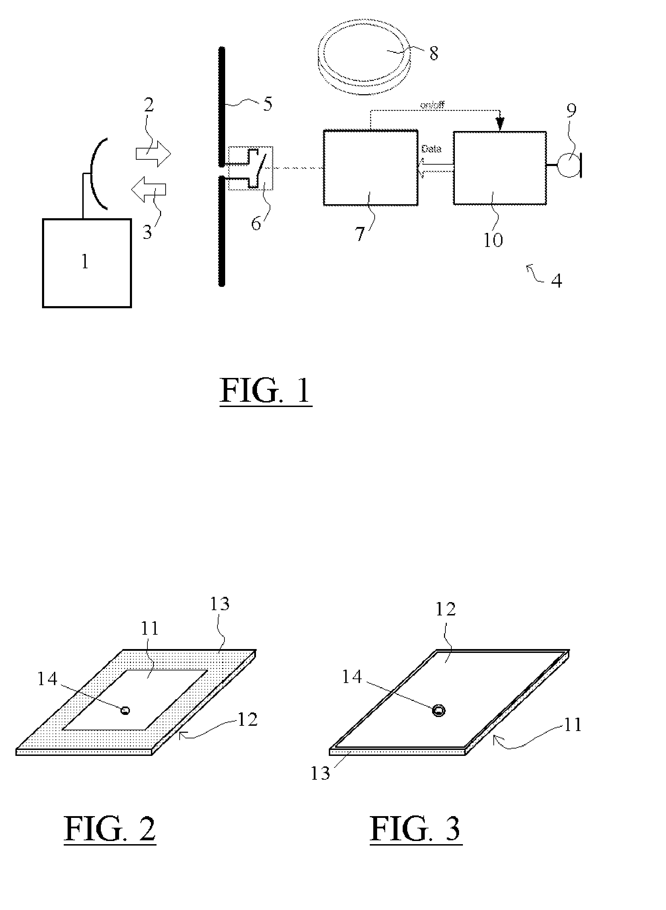

The system shown in Fig. 1 comprises an RF transceiver 1 which is arranged to transmit an RF - radio frequent in general, radar frequent for preference - signal 2 and to receive reflections 3 of the transmitted RF signal 2. The sensor system further comprises a reflection sensor or transponder or 4 which comprises an antenna 5 which is tuned to the RF signal's frequency. The antenna 5 is connected to a switching element 6 which is arranged to switch the antenna's impedance between at least two values; the switching element is controlled by digital control means 7, which may be a microcontroller, which is fed by a battery 8.

In this exemplary embodiment the control module 7 is controlled by digital data from a data module which e.g. can be a voice module, comprising a microphone 9 and an A/D converter 10.

The circuitry of Fig. 1 is thus arranged to control the reflectivity of the dipole 5 by means of the switching element 6, which is controlled - via de A/D converter 10 and the microcontroller 7 - by any signal picked up by the microphone 9, the (analogue) microphone signal being converted, by the A/D converter 10, to a digital signal, which the microcontroller 7 uses to key the switching element 6, and thus to modulate the impedance of the dipole 5. In that way, when the dipole 5 receives a signal 2 from transceiver 1, the extend in which the signal 2 will be reflected to the transceiver 1 is thus coded by the digitized microphone signal, causing that de transceiver 1 is able, by measuring the reflected signal strength to "read out" the digital reflections, coded by the microphone input.

In this way the sensor 4 can act as a remote (secret) microphone, which can only be detected by means of a (directional) radar signal. The presence of such a sensor can be discovered much harder than e.g. a secret microphone system, using a transmitter which broadcasts a modulated RF carrier.

The current consumption of the microcontroller and the switching dipole is that low that e.g. a lithium button battery cell may be sufficient for uninterrupted use during several years. To increase the battery's life time the sensor may - under control of the microcontroller - be activated only for a restricted part of the time. For the main part of the time the sensor is in a so-called sleep mode.

Preferably, the antenna is a micro strip or printed antenna, more preferably a micro strip patch antenna or patch antenna, the structure of which is shown separately in Figs. 2 and 3.

In telecommunication, there are several types of micro strip antennas (also known as printed antennas) the most common of which is the micro strip patch antenna or patch antenna. A patch antenna is a narrowband, wide-beam antenna fabricated e.g. by etching the antenna element pattern in metal trace bonded to an insulating substrate. Because such antennas have a very low profile, are mechanically rugged and can be conformable, they are often mounted on the exterior of aircraft and spacecraft, or are incorporated into mobile radio communications devices. Micro strip antennas are also relatively inexpensive to manufacture and design because of the simple 2-dimensional physical geometry. They are usually employed at UHF and higher frequencies because the size of the antenna is directly tied to the wavelength at the resonant frequency. An advantage inherent to patch antennas is the ability to have polarization diversity. Patch antennas can easily be designed to have Vertical, Horizontal, Right Hand Circular (RHCP) or Left Hand Circular (LHCP) Polarizations with a single antenna feed point. This unique property allows patch antennas to be used in many areas types of communications links that may have varied requirements.

Fig. 2 shows a plan view of configuration of the patch antenna as used in the present embodiment. The surfaces 11 and 12 of the patch antenna are conductive layers supported by an intermediate carrier 13 of an electrically insulating material. The patch antenna has a square shape, one side having a length of λ/4. The location of the feed point 14 is determinative for the impedance of the antenna.

Fig. 3 shows the bottom view of the antenna, showing its ground surface 12 up.

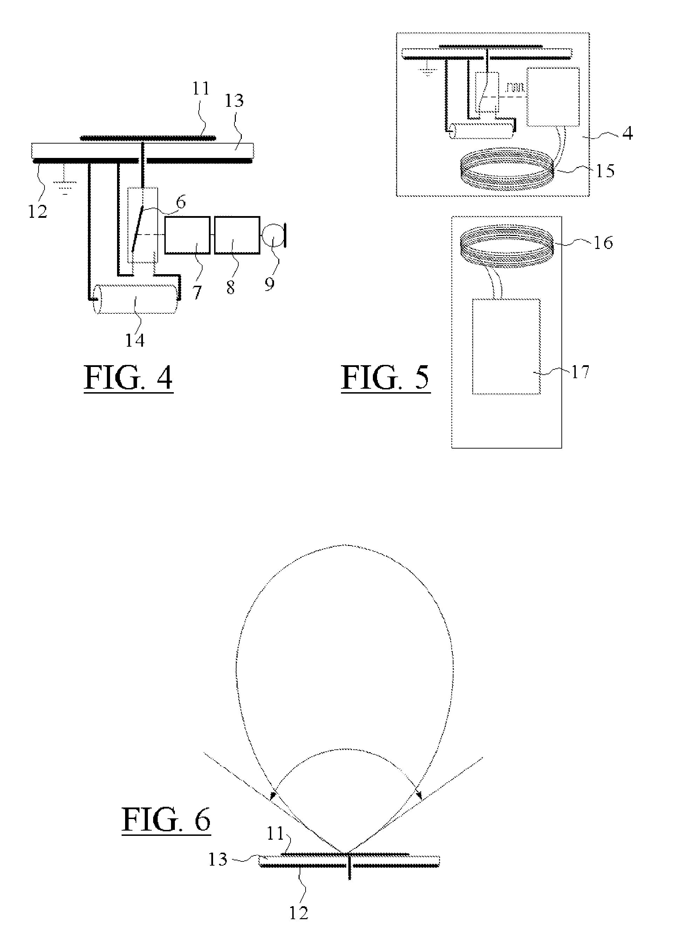

Fig. 4 shows the configuration of the sensor more in detail, viz. a λ/4 line 14 connected with the switching element.
The combination of a make-and-brake type switch 6 and the λ/4 line performs better than using an on-off type switch as shown in Fig. 1.

Fig. 5 shows that the processor 7 may be set up and/or programmed by using an inductive coupling comprising two coils 15 and 16 to be able to control the processor 7 from an external programmer 17.

Fig. 6 shows a sensitivity curve of the patch antenna. The antenna's sensitivity is high and has an opening angle of about 60°. At the bottom side the sensitivity is about zero, thus enabling the sensor e.g. to be used in the vicinity of a (human) body without being hindered by any "hand effect".

Alternative applications of the system may be:
- Measurements on large constructions (buildings, roller coasters etc.) which can be read out without any need for cabling (instead of a microphone, another sensor type can be used, e.g. a displacement sensor or the like.
- Measurements on sportsmen, using e.g. a heart sensor, blood pressure sensor etc.
- Remote sensor for/in data loggers. A data logger is an electronic instrument that records data over time or in relation to location. They may be small, battery powered and portable and vary between general purpose types for a range of measurement applications to very specific devices for measuring in one environment only.

## Claims

1. Sensor system comprising an RF transceiver (1) which is arranged to transmit an RF signal (2) and to receive reflections (3) of the transmitted RF signal, the sensor system comprising a transponder (4) which comprises an antenna (5) which is tuned to the RF signal's frequency, wherein the antenna is connected to a switching element (6) which is arranged to switch the antenna's terminating impedance between at least two values and which switching element is controlled by digital control means (7, 10).

2. Sensor system according to claim 1 or 2, wherein the control means are controlled by voice (9).

3. Sensor system according to claim 1, which is arranged for a radar frequency band.

4. Sensor system according to any of the preceding claims, wherein the antenna (5) is a micro strip or printed antenna.

5. Sensor system according to claim 4, wherein the antenna (5) is a micro strip patch antenna or patch antenna.

6. Sensor system according to claim 4 or 5, the antenna (5) comprises an insulated carrier (13) having a first conductive layer (11) on one side and a second conductive layer (12) on the other side.
